# EUROPEAN PATENT APPLICATION

(11) **EP 3 287 276 A1**
(43) Date of publication of application: **28.02.2018**
(21) Application number: 17187637.8
(22) Date of filing: 24.08.2017
(51) Int. Cl.: B32B 27/32, B29C 51/08, C09J 151/06

(54) **REACTIVE POLYOLEFIN HOT-MELT ADHESIVE WITH LOWER REACTIVATION TEMPERATURE AND USE THEREOF IN DEEP DRAW VACUUM LAMINATION**

(30) Priority: 26.08.2016 EP 16186015
(71) Applicant: SIKA TECHNOLOGY AG, 6340 Baar (CH)
(72) Inventor: Janke, Doreen, 25486 Alveslohe (DE); Paschkowski, Kai, 21635 Jork (DE); Cordes, Mathias, 22525 Hamburg (DE); Paul, Jennifer, 22525 Hamburg (DE)
(74) Representative: Sika Patent Attorneys

(57) **Abstract**

The invention relates to a reactive polyolefin hot-melt composition and use thereof in producing composite elements by thin film lamination, especially by vacuum deep draw laminating and IMG-laminating processes. The hot-melt composition comprises at least one thermoplastic silane group containing poly-α-olefin that is solid at 25 °C, at least one non-functionalized amorphous propylene-ethylene copolymer wax having a softening point of not more than 120 °C, and at least one paraffin wax having a softening point in the range from 80 to 130 °C. The invention is also related to a method for producing a composite element comprising a polymeric film and a carrier, to a composite element obtainable by use of the method, and to the use of the hot-melt adhesive composition as adhesive in vacuum deep draw laminating or in IMG-laminating process.

## Description

### Technical field

The invention relates to polyolefin hot-melt adhesives and use thereof for producing composite elements by thin by thin film lamination techniques, in particular by deep draw vacuum lamination and IMG-lamination processes.

### Background of the invention

Hot-melt adhesives have been widely used in industry for producing composite elements by film laminating techniques. These adhesives have the advantage of developing a high initial strength immediately after their application upon cooling and they also provide good thermal stability and resistance to environmental influences through physically occurring bonding. The hot-melt adhesives have, however, some disadvantages, which render them less suitable for thin film lamination, in particular for vacuum deep draw laminating processes. In thin film lamination, the adhesive is first applied as a thin film on the surface of a first substrate after which the pre-coated substrate is contacted with a surface of a second substrate to create an adhesive bond between the substrates. In vacuum deep draw lamination, the substrates are drawn together by applying vacuum in the space between the substrates. Conventional polyolefin hot-melt adhesives are characterized by relatively short open times and when applied as thin film on a substrate, the adhesive rapidly solidifies and loses its ability to wet the surface of the other substrate. The short open time of an adhesive is particularly detrimental in vacuum deep draw laminating process, in which the waiting time, i.e. the time period between applying the adhesive to the surface of the first substrate and contacting the adhesive film with the second substrate is relatively long.

For the above stated reasons, polyurethane (PUR) adhesives instead of polyolefin hot-melt adhesives have been widely used in vacuum deep draw laminating processes, especially in automotive industry. PUR adhesives are typically used in thin film lamination in form of dispersion and solvent based adhesives. These adhesive systems are especially suitable for thin film lamination with heated tools, since owing to the high molecular weight of the polyurethane polymer, they offer high initial strength even at high mold removal temperature. On the other hand, due to the high molecular weight of the polyurethane polymer, a method of contact-bonding is typically used in the laminating process. In contact-bonding, the adhesive is first applied to the surface of the first substrate (carrier) after which the layer of adhesive is contacted with the surface of a second substrate (film), the surface of which has been coated with a primer. The disadvantage of using dispersion or solvent based PUR- adhesives in vacuum deep draw lamination is that the adhesive has to be first applied on a carrier, which is as a rule a three dimensional molded article. It is, therefore, necessary to spray the adhesive to the carrier, which is relatively complicated process and which increases the adhesive consumption due to overspray. In some cases the overspray is so critical that PUR dispersion adhesives and solvent based PUR adhesive systems cannot be used in thin film lamination.

In order to solve the problems related to contact-bonding, PUR-adhesives formulated as reactive hot-melt adhesives have been designed for use in thin film lamination processes. These adhesives have distinctly lower molecular weights compared to dispersion or solvent-based PUR adhesives, which make them more suitable for use in film lamination processes without contact-bonding. When using reactive hot-melt adhesives, it is no longer necessary to apply the adhesive to the carrier and it is sufficient to apply the adhesive only to surface of the film. This significantly decreases the complexity of the film lamination process since the film is typically two-dimensional and the adhesive can be easily applied on it using any conventional means, and the overspray can thus be avoided. However, in case non-polar substrates, such as polyethylene and polypropylene substrates, are bonded with PUR-adhesives, the surfaces of the substrates have to be treated with a primer due to the low adhesion of highly polar PUR-adhesives to non-polar substrates.

Polyolefin hot-melt adhesives, especially the ones based on amorphous poly-α-olefins, have highly non-polar properties and are, therefore, in principle suitable for laminating non-polar substrates without the pre-treatment of the substrates with a primer. A special class of reactive polyolefin hot-melt adhesives that has been used in film lamination processes is based on silane-grafted polyolefin pre-polymers. After application on a surface, a hot-melt adhesive based on silane-grafted poly-α-olefins not only binds physically (i.e., by cooling) but also chemically as a result of silane groups reacting with water. Once contacted with moisture, the chemically reactive silane groups of the polyolefin pre-polymers, such as methoxysilane groups, react with water to form silanols, which subsequently undergo reaction with other silanol groups to form covalent bonds between individual polymer molecules as part of a condensation reaction. Due to the physical and chemical binding, these hot-melt adhesives exhibit superior properties compared to non-reactive polyolefin hot-melt adhesives, especially in terms of better heat stability and resistance to environmental influences.

For thin film lamination with reactive and non-reactive hot-melt adhesives, a method of reactivation by heat is typically used. In this method, the adhesive is first applied in a molten state to a surface of a first substrate (film), where it sets rapidly. The adhesive layer on the first substrate is then reactivated by heating before being contacted with the surface of another substrate (carrier). In the reactivation step, the adhesive has to be melted to such extend that it is able to adequately wet the surface of the carrier. In case of reactive hot-melt adhesive, the heating of the adhesive during the pre-coating step should result only in partial cross-linking of the adhesive. Otherwise, the hot-melt adhesive cannot be any more re-melted in the subsequent reactivation step for building of the adhesive bond between the film and the carrier. The temperature to which the adhesive is heated is generally referred as reactivation temperature.

The length of the waiting time, i.e. the time period between the reactivation of the adhesive by heat and contacting the layer of adhesive with surface of the carrier, depends on the type of the laminating process. In a vacuum deep draw lamination process and especially in in IMG-laminating (in mold grain) process the waiting time is relatively long, typically in the range of 10-15 seconds. After the reactivation step, the adhesive is not anymore heated and its temperature starts to drop towards the temperature of the surroundings. Consequently, a hot-melt adhesive used in vacuum deep draw laminating process has to be able to wet the surface of the carrier and to form an adhesive bond between the substrates at relatively low temperatures. In IMG-laminating process, the temperature of the adhesive can be as low as 50-70°C at the end of the waiting time. Furthermore, a suitable hot-melt adhesive has to be able to provide sufficient tack at the end of the waiting time, which means that the open time of the adhesive has to be at least as long as the waiting time. Finally, the hot-melt adhesive should be able to develop high initial bond strength in a short period time after the substrates have been contacted with each other.

The state-of-the-art reactive polyolefin hot-melt adhesives are not suitable for use in laminating processes, in which the waiting time is relatively long such as deep draw vacuum and in particular IMG-laminating processes. The unsuitability is mainly a result of short open time but also of the inability of the adhesive to wet the surface of the substrate at low temperatures. Typical state-of-the-art reactive polyolefin hot-melt adhesive also have to be reactivated at high temperatures, which increases the process operating costs and limits the choice of materials that can be used in the laminated substrates.

Finally, the state-of-the-art reactive polyolefin hot-melt adhesives tend to develop very strong adhesion to uncoated aluminum surfaces of laminating tools. In a typical laminating process, the adhesive comes in contact not only with the substrate to be laminated but also, at the edge areas of the substrate, with the surfaces of laminating tool. As a result, laminated parts are adhered to the laminating tool and can be removed therefrom only with great difficulty. The problem related to adhesion to aluminum surfaces can in principle be solved by using repelling coatings, such as Teflon or silicone coatings. Teflon coatings have relatively long life time but silicon coatings tend to be less resistant to abrasion. The use of coatings not only increases the process investment costs but also operational costs due to process downtimes resulting from restoration of the coatings.

There is thus need for reactive polyolefin hot-melt adhesive, which is more suitable for use as adhesive in vacuum deep draw laminating process, and especially in IMG-laminating process.

### Summary of the invention

The object of the present invention is to provide a reactive polyolefin hot-melt adhesive that is suitable for use as adhesive in vacuum deep draw lamination and especially in IMG-laminating processes. In other words, the objective is to provide a reactive polyolefin hot-melt adhesive that can be used as adhesive in a lamination process, in which the adhesive is applied by a method of reactivation using a low reactivation temperature and in which process the substrates are contacted with each other after a relatively long waiting time.

In particular, the objective of the present invention is to provide a reactive polyolefin hot-melt adhesive that has a low softening point and relatively long open time but which adhesive also exhibits high initial thermal strength and high initial bonding strength.

A still further objective is to provide a reactive polyolefin hot-melt adhesive that provides a good bonding to ABS, wood and to natural and synthetic fibers, and which adhesive is suitable for use in laminating substrates using uncoated aluminum tools.

It was surprisingly found out that a hot-melt composition comprising silane-grafted poly-α-olefin pre-polymers, non-functionalized amorphous propylene-ethylene copolymer wax with an appropriate selection of additional components is able to solve the problems related to state-of-the-art reactive polyolefin hot-melt adhesives.

According to first aspect of the present invention, a hot-melt adhesive composition as defined in claim 1 is provided.

One of the advantages of the reactive hot-melt adhesive composition of the present invention is that it has a low softening point and relatively long open time. The adhesive composition also retains its tack and is able to wet the surface of a substrate at low temperatures, in particular at temperatures below 100 °C. Furthermore, the adhesive composition exhibits high initial bonding strength and high initial thermal strength.

The reactive hot-melt adhesive composition of the present invention also provides good bonding to various substrates, in particular to substrates composed of ABS, wood and to natural and synthetic fibers and low bonding to aluminum surfaces.

According to another aspect of the present invention, a method for producing a composite element, a composite element obtainable by the use of the method, and use of the hot-melt adhesive composition as adhesive in deep draw vacuum laminating or IMG-laminating process, are provided.

### Detailed description of the invention

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "α-olefin" designates an alkene having the molecular formula CₓH2ₓ (x corresponds to the number of carbon atoms), which features a double carbon-carbon bond at the first carbon atom (α-carbon). Examples of α-olefins are ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as α-olefins according to the present disclosure.

The term "poly-α-olefin" designates homopolymers obtained by polymerization of α-olefins and copolymers obtained by oligomerization of multiple distinct α-olefins.

The term "polyolefin wax" designates low molecular weight polymers of linear or branched α-olefins having from 2 to 30 carbon atoms prepared by means of metallocene catalysts. These low molecular weight polymers have a molecular weight in the range of 5000 - 25,000 g/mol. They include both homopolymers of the olefins mentioned and copolymers of these olefins among one another in any ratios.

Such polyolefin waxes can be obtained by thermal decomposition of branched or unbranched polyolefin plastics or by direct polymerization of olefins. Suitable polymerization processes are, for example, free-radical processes, where the olefins, for example, ethylene, are reacted at high pressures and temperatures to give more or less branched waxes and processes, where ethylene and/or higher α -olefins are polymerized using metal-organic catalysts, for example Ziegler-Natta or metallocene catalysts, to give unbranched or branched waxes.

The term "paraffin wax" designates hard, crystalline wax composed mainly of saturated paraffin hydrocarbons. The paraffin waxes are commonly obtained from petroleum distillates, derived from mineral oils of the mixed-base or paraffin-base type.

The term "polyisocyanate" designates compounds with two or more isocyanate groups.

The term "silane" designates a compound containing silicon, in which the silicon atom carries at least one, for example, two or three alkoxy groups. Silane can have at least one directly bonded organic remainder and thereby can have at least one Si-C bond.

The term "silane group" designates the silicon containing group that is bonded to the organic remainder of the silane. Silane, or its silane groups, can have the property of hydrolyzing upon contact with moisture and thereby releasing an alcohol. For example, siloxane or silicones are not to be considered as silanes in the sense of this disclosure.

The term "graft degree" designates the ratio of polymer groups in side chains to the polymer constituting the main chain of the grafted compound expressed as weight percentage. In the present disclosure the terms "graft degree", "grafting degree", and "degree of grafting" are used interchangeably.

The term "functionalized polymer" designates polymers which are chemically modified so as to contain a functional group on the polymer backbone. In contrast, the term "non-functionalized polymer" designates polymers which are not chemically modified so as to contain functional groups such as epoxy, silane, sulfonate, amide, or anhydride, on the polymer backbone. In the present disclosure the terms "(non)functionalized and "(un)modified" are used interchangeably.

The term "open time" designates the length of a time period during which an adhesive applied to a surface of a substrate is still able to form an adhesive bond after being contacted with another substrate.

The term "reactivation temperature" designates the temperature to which an adhesive is heated for reactivation.

The term "waiting time" designates the time period between reactivating the adhesive and contacting the adhesive with a surface of another substrate for formation of an adhesive bond.

The term "softening point" or "softening temperature" designates a temperature at which compound softens in a rubber-like state, or a temperature at which the crystalline portion within the compound melts. The softening point can be measured by a ring and ball method according to DIN EN 1238.

The term "molecular weight" designates the number average molecular weight (Mₙ). The molecular weight can be determined by gel permeation chromatography using polystyrene as standard in a polymer solution in tetrahydrofuran.

The present invention relates in a first aspect of the invention to a hot-melt adhesive composition comprising:
A hot-melt adhesive composition comprising:
   a) at least one thermoplastic silane group containing poly-α-olefin that is solid at 25 °C,
   b) at least one non-functionalized amorphous propylene-ethylene copolymer wax having a softening point measured by Ring and Ball method according to DIN EN 1238 of not more than 120 °C, preferably not more than 100 °C, and
   c) at least one paraffin wax having a softening point measured by Ring and Ball method according to DIN EN 1238 in the range from 80 to 130 °C.

The silane group-containing poly-α-olefins are known to a person skilled in the art. For example, they can be produced by grafting unsaturated silanes, such as vinyl-trimethoxysilane, onto poly-α-olefins. A detailed description of the production of silane-grafted poly-α-olefins can be found, for example, in US 5,994,474 and DE 40 00 695 A1.

For example, the silane group containing poly-α-olefin can be a silane grafted copolymer or terpolymer made up of at least one of the monomers, which are chosen from ethylene, propylene, butylene and isobutylene. Particularly suitable examples of silane grafted poly-α-olefins which are solid at 25 °C include silane grafted polyethylene and polypropylene, in particular silane grafted polypropylene homopolymers and silane grafted polyethylene homopolymers.

The silane-group containing poly-α-olefin can have a softening point in the range from 60 to 150 °C. Preferably, the thermoplastic silane-group containing poly-α-olefin has a softening point in the range from 80 to 140 °C, more preferably in the range from 90 to 120 °C.

Preferably, the silane-group containing poly-α-olefin has a molecular weight (Mₙ) in the range from 7000 to 25,000 g/mol.

The total amount of the silane group containing poly-α-olefins can be more than 30.0 % by weight, preferably 30.0 - 90.0 % by weight, more preferably 35.0 - 70.0 % by weight, most preferably 40.0 - 60.0 % by weight, based on the total weight of the hot-melt adhesive composition.

Preferably, the silane group-containing poly-α-olefin is a silane-grafted atactic poly-α-olefin (APAO).

The silane group-containing poly-α-olefin can be a poly-α-olefin obtained by Ziegler-Natta catalyzed polymerization, to which silane groups have been grafted. The silane group-containing poly-α-olefin can also be a poly-α-olefin obtained by metallocene catalyzed polymerization, to which silane groups have been grafted.

The grafting degree of the silane-grafted poly-α-olefin is preferably greater than 0.5 % by weight, especially greater than 1.5 % by weight, relative to the weight of the non-functionalized poly-α-olefin. If a silane-grafted poly-α-olefin produced by means of the Ziegler-Natta process is used as the silane-grafted poly-α-olefin, the grafting degree is preferably between 1.0 and 8.0 % by weight, especially between 1.5 and 5.0 % by weight.

The hot-melt adhesive composition can comprise at least two different silane group containing poly-α-olefins that are solid at 25 °C. Preferably, the hot-melt adhesive composition comprises at least one low silane-grafted poly-α-olefin, in particular at least one silane-grafted poly-α-olefin having a degree of grafting in the range of 1.0 - 3.0, and at least one high silane-grafted poly-α-olefin, in particular at least one silane-grafted poly-α-olefin having a degree of grafting in the range of 3.5 - 8.0.

The hot-melt adhesive composition can have at least one poly-α-olefin, which is produced through the grafting of silanes on a poly-α-olefin, which has been produced according to the Ziegler-Natta process, as well as at least one silane grafted poly-α-olefin, which is produced through grafting of silanes on a poly-α-olefin that has been produced by means of metallocene catalysts.

The total amount of the silane-grafted poly-α-olefins can be more than 30.0 % by weight, preferably 30.0 - 90.0 % by weight, more preferably 35.0 - 70.0 % by weight, most preferably 40.0 - 60.0 % by weight, based on the total weight of the hot-melt adhesive composition.

The hot-melt adhesive composition comprises at least one non-functionalized amorphous propylene-ethylene copolymer wax having a softening point of not more than 120 °C, preferably not more than 100 °C.

Preferably, the amorphous non-functionalized propylene-ethylene copolymer wax has been obtained by metallocene-catalyzed polymerization. The amorphous propylene-ethylene copolymer wax may have a molecular weight of 5000 - 35,000 g/mol, more preferably 5000 - 30,000 g/mol.

The amount of the non-functionalized amorphous propylene-ethylene copolymer wax in the hot-melt adhesive composition is not subject to any particular restrictions. It was, however, found that increasing the amount of this component in the hot-melt adhesive composition, tends to increase the adhesion to aluminum surfaces. On the other hand, decreasing the amount of the non-functionalized amorphous propylene-ethylene copolymer wax below a certain limit was found to have a negative effect on the other properties of the hot-melt adhesive, such as to adhesive bond strength to polar and non-polar substrates.

Preferably, the total amount of the non-functionalized amorphous propylene-ethylene copolymer waxes is in the range from 0.5 to 20.0 % by weight, more preferably from 1.0 to 15.0 % by weight, even more preferably from 5.0 to 15.0 % by weight, most preferably from 7.5 to 12.5 % by weight, based on the total weight of the hot-melt-adhesive composition.

Examples of suitable commercially available non-functionalized amorphous propylene-ethylene copolymer waxes include, for example, Licocene® PP 1302, Licocene® PP 1502, Licocene® PP 1602, Licocene® PP 2602, and Licocene® PP 3602 TP (available from Clariant).

The hot-melt adhesive composition comprises a at least paraffin wax having a softening point in the range from 80 to 130 °C, preferably from 90 to 120 °C.

According to one or more embodiments, the paraffin wax is a Fischer-Tropsch wax. The amount of the paraffin wax in the hot-melt adhesive composition is not subject to any particular restrictions except that the amount of wax should not be so high that it results in substantial impairment of the adhesion of the hot-melt adhesive. A substantial impairment is understood to mean, in the context of the present disclosure, that the adhesion of a composition with paraffin wax to the same substrate is more than 50 % lower than in the case of a hot-melt composition containing, instead of the paraffin wax, the same quantity of silane group containing poly-α-olefin.

Preferably, the total amount of the paraffin waxes is not more than 5.0 % by weight, based on the total weight of the hot-melt-adhesive composition. In case the amount of this component is higher, the adhesion of the hot-melt adhesive is substantially affected, for example, with respect to non-polar substrates such as polypropylene. Preferably, the total amount of the paraffin is 1.0 - 5.0 % by weight, more preferably 1.0 - 3.0 % by weight, based on the total weight of the hot-melt-adhesive composition.

According to one or more embodiments, the hot-melt adhesive composition further comprises, in addition to the silane group containing poly-α-olefin(s), at least one additional thermoplastic polymer, which is solid at 25 °C and which contains no silane groups. This additional thermoplastic polymer can be a homopolymer or copolymer of unsaturated monomers, selected, for example, from the group consisting of ethylene, propylene, butylene, isobutylene, isoprene, vinyl acetate and vinyl ester with C₃ to C₁₂ carboxylic acids and (meth)acrylate. In the context of this disclosure, the term "(meth)acrylate" designates both acrylates and methacrylates. Suitable thermoplastic polymers without silane goups include ethylene-vinyl acetate (EVA), atactic poly-α-olefins (APAO) as well as polypropylene and polyethylene homopolymers in functionalized or in non-functionalized form.

These additional thermoplastic polymers without silane groups can have a softening point in the range from 60 to 160 °C, preferably from 80 to 140 °C, more preferably from 90 to 120 °C.

Preferably, the additional thermoplastic polymer without silane groups has a molecular weight (Mₙ) in the range from 7000 to 250,000 g/mol.

The additional thermoplastic polymer without silane groups can be a poly-α-olefin. Preferably, the additional thermoplastic polymer without silane groups is atactic poly-α-olefin (APAO) obtained by metallocene catalyzed polymerization.

The weight ratio of the silane group containing solid poly-α-olefins to additional thermoplastic polymers without silane groups can be in the range from 1:1 to 20:1. The total amount of the additional thermoplastic polymers without silane groups can be 5.0 - 35.0 % by weight, preferably, 15.0 - 30.0 % by weight, based on the total weight of the hot-melt adhesive composition.

The hot-melt adhesive composition can further comprise, in addition to non-functionalized amorphous propylene-ethylene copolymer waxes, at least one polar-modified polyolefin wax. The addition of polar-modified polyolefin waxes has been found to improve the adhesion of the hot-melt adhesive composition to polar substrates.

Suitable polar-modified polyolefin waxes are produced by grafting polar olefin monomers, for example, α-β-unsaturated carboxylic acids and/or derivatives thereof, for example (meth)acrylic acid or maleic anhydride and/or substituted and/or unsubstituted styrenes, to polyolefin waxes.

According to one or more embodiments, the hot-melt adhesive composition further comprises at least one maleic anhydride functionalized polyolefin wax. Preferably, the maleic anhydride functionalized polyolefin wax is a wax of ethene and propene homo- and copolymers grafted with maleic anhydride, in particular, a polypropylene or polyethylene wax grafted with maleic anhydride.

Preferably, the maleic anhydride functionalized polyolefin wax has a softening point of not more than 150 °C, more preferably not more than 120 °C, most preferably not more than 100 °C. For example, the softening point of the maleic anhydride functionalized polyolefin wax can be in the range from 50 to 150 °C, preferably from 60 to 120 °C, most preferably from 60 to 100 °C.

The grafting degree of the maleic anhydride functionalized polyolefin wax can be at least 1 % by weight, for example, at least 3 % by weight, relative to the weight of the non-functionalized wax. For example, the grafting degree can be in the range from 2 to 15 % by weight, preferably from 4 to 15 % by weight, most preferably from 8 to 12 % by weight, relative to the weight of the non-functionalized wax.

The maleic anhydride functionalized polyolefin wax can have a melt viscosity at 170 °C in the range from 10 to 10,000 mPa·s, in particular, from 1,000 to 5,000 mPa·s.

The total amount of maleic anhydride functionalized polyolefin waxes, if present in the hot-melt adhesive composition, is preferably not more than 10.0 % by weight, based on the total weight of the hot-melt-adhesive composition. Preferably, the total amount of the maleic anhydride functionalized polyolefin waxes, if present in the hot-melt adhesive composition, is 0.5 - 10.0 % by weight, more preferably 1.0 - 7.5 % by weight, most preferably 1.5 - 5.0 % by weight, based on the total weight of the hot-melt adhesive composition.

The hot-melt adhesive composition can further comprise at least one resin that is tackifying at 25 °C.

Suitable tackifying resins include medium- to high-molecular weight compounds selected from the group consisting of hydrocarbon resins, polyolefins, polyesters, polyethers, poly(meth)acrylates and amino resins.

The tackifying resin has preferably a softening point in the range from 50 to 150 °C, more preferably from 70 to 130 °C, most preferably from 80 to 120 °C.

According to one or more embodiments, the hot-melt adhesive composition further comprises at least one hydrocarbon resin, preferably an aliphatic C₅-C₉-hydrocarbon resin or an aromatic modified C₅-C₉-hydrocarbon resin. Preferably, the hydrocarbon resin has a softening point in the range from 50 to 150 °C, more preferably from 70 to 130 °C, most preferably from 80 to 120 °C.

Suitable commercially available C₅-C₉-hydrocarbon resins include, for example, Wingtack® 10 and Wingtack® 86 from Cray Valley, Escorez® 5040 from Exxon Mobile Chemical, Picco® A10, Regalite® R1010 from Eastman Kodak, and Hikorez® A-2115 from Kolon Industries.

Other suitable tackifying hydrocarbon resins include, for example, polyterpene resins, such as Silvares® TR A25 from Arizona Chemical, rosin esters and/or tall oil rosin esters, such as Silvatac® RE12, Silvatac® RE10, Silvatac® R15, Silvatac® RE20, Silvatac® RE25 and Silvatac® RE40 from Arizona Chemical.

The amount of the hydrocarbon resin in the hot-melt adhesive composition is not subject to any particular restrictions. It was, however, found that increasing the amount of the hydrocarbon resin in the hot-melt adhesive composition increases the adhesion to aluminum surfaces. Preferably, the total amount of the hydrocarbon resins, if present in the hot-melt adhesive composition, is not more than 20.0 % by weight, based on the total weight of the hot-melt-adhesive composition. In particular, the total amount of the hydrocarbon resins, if present in the hot-melt adhesive composition, is preferably in the range from 1.0 to 20.0 % by weight, more preferably from 1.0 to 15.0 % by weight, even more preferably 2.5 - 12.5 % by weight, most preferably from 5.0 to 10.0 % by weight, based on the total weight of the hot-melt-adhesive composition.

Furthermore, it has proved advantageous if the weight ratio of the total amount of hydrocarbon resins to the total amount of silane group containing poly-α-olefins is less than 0.5. Preferably, the weight ratio of the total amount of hydrocarbon resins to the total amount of silane group-containing poly-α-olefins is in the range from 0.1 to 0.35, most preferably in the range from 0.12 to 0.2.

The hot-melt adhesive composition can further comprise at least one reaction product (RP) of a polyisocyanate with an isocyanate reactive silane (S). The addition of the reaction products (RP) has been found to improve the adhesion of the hot-melt adhesive composition to polar substrates.

A suitable isocyanate reactive silane (S) includes one isocyanate reactive group, in particular, precisely only one isocyanate reactive group, which is selected from hydroxyl groups, mercapto groups and amino groups. Preferably, reaction product (RP) has a molecular weight (Mₙ) of less than 1,500 g/mol.

Isocyanate reactive silanes which feature multiple isocyanate reactive groups, such as for example N-(2-aminoethyl)-3-aminopropyl-trimethoxysilane, are in principle not suitable, and preferably not used as the isocyanate reactive silane (S). For example, if silanes with multiple isocyanate reactive groups are used, the polyisocyanate can react multiple times, which results in highly cured products, which are not suitable.

Reaction products of a polyisocyanate with an isocyanate reactive silane (S) having high molecular weights, for example, molecular weights (Mₙ) above 1500 g/mol, are not suitable and preferably not used as the reaction product (RP). Silane terminated polyurethane prepolymers (S-PUR), which can be employed in polyurethane sealing materials that cure at room temperature, can be used but are preferably not used as reaction product (RP). For example, if such reaction products with high molecular weights are used alone, for example, without being combined with exemplary reaction products (RP), the corresponding hot-melt adhesive compositions can have either no or at best insufficient adhesion on polar substrates.

Preferably, the reaction product (RP) does not or only minimally increases the viscosity of the hot-melt adhesive composition. For example, the reaction product (RP) can have a low viscosity, for example, less than 1000 mPa·s at 40 °C.

Preferably, the open time of the hot-melt adhesive composition is only minimally shortened by the addition of the reaction product (RP) in the hot-melt adhesive composition.

For example, the compound according to formula (I) of the isocyanate reactive silane (S) is suitable for obtaining the reaction product (RP).

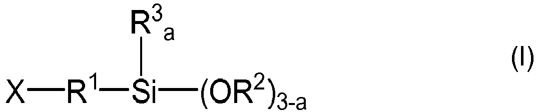

Herein R¹ stands for a linear or branched, for example, cyclical, alkylene groups with between 1 and 20 carbon atoms, for example, with aromatic portions. Furthermore R² stands for an alkyl group with between 1 and 5 carbon atoms, for example, for a methyl- or ethyl group, or an acyl group. R³ stands for an alkyl group with between 1 and 8 carbon atoms, for example, for a methyl group. Furthermore "a" stands for one of the values 0, 1 or 2, for example, 0 or 1. For example, "a" is 0. "X" stands for an isocyanate reactive group, for example, selected from -OH, -SH, -NH₂ and -NHR⁴.

R⁴ herein can stand either for an alkyl residue with between 1 and 12 carbon atoms or for a cycloaliphatic remainder with between 6 and 12 carbon atoms. R⁴ can stand for one of the substituents of the formula (II).

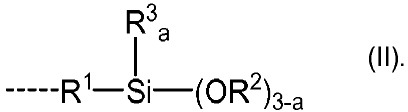

The dotted lines in the formulae in this document represent in each case the bond between one substituent and the corresponding molecule remainder.

Exemplary isocyanate-reactive silanes (S) include:
3-aminopropyltrimethoxysilane, 3-aminopropyltriethoxysilane, 3-aminopropyl-dimethoxymethylsilane, 3-amino-2-methylpropyl-trimethoxysilane, 4-aminobutyl-trimethoxysilane, 4-aminobutyl-dimethoxymethylsilane, 4-amino-3-methylbutyl-trimethoxysilane, 4-amino-3,3-dimethylbutyl-trimethoxysilane, 4-amino-3,3-dimethylbutyl-dimethoxymethylsilane, 2-aminoethyl-trimethoxysilane, 2-aminoethyl-dimethoxymethylsilane, aminomethyl-trimethoxysilane, aminomethyl-dimethoxymethylsilane, aminomethylmethoxydimethylsilane, 7-amino-4-oxaheptyldimethoxymethylsilane, N-(methyl)-3-aminopropyltrimethoxysilane, N-(n-butyl)-3-aminopropyltrimethoxysilane bis-[3-(trimethoxysilyl)-propyl]-amine, bis-[3-(triethoxysilyl)-propyl]-amine;
3-mercaptopropyltriethoxysilane, 3-mercaptopropyltrimethoxysilane, 3-mercaptopropyltriisopropoxysilane, 3-mercaptopropyldiethoxymethylsilane, 3-mercaptopropyldimethoxymethylsilane, 3-mercaptopropyldiisopropoxmethylsilane, 3-mercaptomethyltrimethoxysilane, 3-mercaptomethyltriethoxysilane, 3-mercaptomethyltriisopropoxysilane, mercaptomethyldimethoxymethylsilane, mercaptomethyl-diethoxymethylsilane, 3-mercaptopropyl-methyldimethoxysilane, 3-mercaptopropyl-methoxy(1,2-ethylendioxy)-silane, 3-mercaptopropyl-methoxy(1,2-propylendioxy)-silane, 3-mercaptopropyl-ethoxy(1,2-propylendioxy)-silane, 3-mercaptopropyldimethoxymethylsilane, 3-mercaptopropyl-diethoxymethylsilane, 3-mercapto-2-methylpropyl-trimethoxysilane and 4-mercapto-3,3-dimethylbutyltrimethoxysilane.

Examples of particularly suitable isocyanate reactive silanes (S) are 3-mercaptopropyltriethoxysilane and 3-mercaptopropyltrimethoxysilane, for example, 3-mercaptopropyltrimethoxysilane.

The polyisocyanates employed for the production of the reaction product (RP) can be 2,4- and 2,6-toluylendiisocyanate (TDI) and any desired mixtures of these isomers, 4,4'-, 2,4'- and 2,2'-diphenylmethandiisocyanate and any desired mixtures of these isomers (MDI), mixtures made up of MDI and MDI-Homologues (polymeric MDI or PMDI), 1,3- and 1,4-phenylendiisocyanate, naphthaline-1,5-diisocyanate (NDI), 3,3'-dimethyl-4,4'-diisocyanatodiphenyl (TODI), 1,6-hexamethylendiisocyanate (HDI), 2-methylpentamethylene-1,5-diisocyanate, 2,2,4- and 2,4,4-trimethyl-1,6-hexamethylendiisocyanate (TMDI), 1,12-dodecamethylendiisocyanate, cyclohexane-1,3- and cyclohexane-1,4-diisocyanate and any desired mixtures of these isomers, 1-isocyanato-3,3,5-trimethyl-5-isocyanatomethyl-cyclohexane (= isophorone diisocyanate or IPDI), perhydro-2,4'- and -4,4'-diphenylmethane diisocyanate (HMDI), 1,4-diisocyanato-2,2,6-trimethylcyclohexane (TMCDI), m- and p-xylylendiisocyanate (m- and p-XDI), m-tetramethyl-1,3- and m-tetramethyl-1,4-xylylene diisocyanate and p- tetramethyl-1,3- and m-tetramethyl-1,4-xylylene diisocyanate (m- and p-TMXDI).

Further exemplary polyisocyanates are the isocyanurates and biurets of the immediately aforementioned polyisocyanates.

For example, polyisocyanates which are selected from the group consisting of 4,4'-, 2,4'- and 2,2'-diphenylmethane diisocyanate (MDI), 2,4- and 2,6-toluylene diisocyanate (TDI), 1,6-hexamethylene diisocyanate (HDI), 1-isocyanato-3,3,5-trimethyl-5-isocyanatomethyl-cyclohexane (= isophorone diisocyanate or IPDI); isocyanurates of MDI, TDI, HDI or IPDI, as well as biurets of MDI, TDI, HDI and/or IPDI can be used for the polyisocyanate that is employed for the production of the reaction product (RP).

For the creation of the reaction product (RP) at least one isocyanate reactive silane (S) and at least one polyisocyanate can react with one another in a suitable manner. For example, if the reaction takes place in the presence of a stoichiometric surplus of the isocyanate groups when compared with the isocyanate groups reactive group of the isocyanate reactive silane (S), then not all the isocyanate groups will be reacted, for example, the reaction product (RP) features both isocyanate groups and silane groups. In an exemplary case, in which the polyisocyanate is a diisocyanate and the isocyanate reactive silane carries a silane group, the reaction product (RP) that is created can carry precisely one silane group and one isocyanate group.

The reaction can take place on a stoichiometric basis, for example, in a stoichiometric shortage of the isocyanate groups when compared with the isocyanate reactive group of the isocyanate reactive silane (S). This can ensure that all isocyanate groups are substantially reacted.

According to one or more embodiments, the reaction product (RP) of a polyisocyanate with an isocyanate reactive silane does not feature any isocyanate groups.

The reaction products of 4,4'-, 2,4'- or 2,2'-diphenylmethane diisocyanate (MDI) with a 3-mercaptopropyltrimethoxysilane, 3-mercaptopropyltriethoxysilane or 3-mercaptopropyl-dimethoxymethylsilane are examples of preferred reaction products (RP).

A reaction product of 4,4'-, 2,4'- or 2,2'-diphenylmethane diisocyanate (MDI) with a 3-mercaptopropyltrimethoxysilane, 3-mercaptopropyltriethoxysilane or 3-mercaptopropyl-dimethoxymethylsilane, produced in a stoichiometric surplus of the isocyanate reactive groups of the isocyanate reactive silane (S) when compared to the isocyanate groups of the polyisocyanate are particularly preferred reaction products (RP).

Preferably, the total amount of the reaction products (RP) is not more than 5.0 % by weight, based on the total weight of the hot-melt-adhesive composition. Preferably, total amount of the reaction products (RP), if present in the hot-melt adhesive composition, is in the range from 0.1 to 5.0 % by weight, more preferably from 0.1 to 2.5 % by weight, most preferably from 0.1 to 1.0 % by weight, based on the total weight of the hot-melt-adhesive composition.

The hot melt adhesive composition can also comprise at least one adhesion promoter of the formula (III).

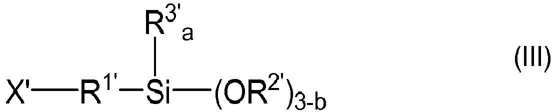

Herein R^{1'} stands for a linear or branched, for example, cyclical alkylene group with between 1 and 20 C atoms, for example, with aromatic portions and/or heteroatoms, for example, in the form of amine nitrogen atoms. R^{2'} stands for an alkyl group having between 1 and 5 C atoms, for example, for a methyl or ethyl group, or an acyl group and R^{3'} stands for an alkyl group having between 1 and 8 C atoms, for example, for a methyl group. "b" stands for one of the values 0, 1 or 2, for example, 0 or 1. For example, "b" can stand for 0. X' stands for a group which is selected from -OH, -SH, -NH₂, -NHR^{4'}, glycidyloxy-, (meth)acryloxy-, acylthio- and vinyl groups. R^{4'} can stand either for an alkyl remainder with between 1 and 12 C atoms or for a cycloaliphatic or aromatic remainder having between 6 and 12 C atoms. R^{4'} can stand for a substituent of the formula (IV).

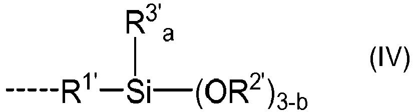

The adhesion promoter of the formula (III) can stand, for example, for an adhesion promoter which is selected from:
3-glycidyloxypropyltrimethoxysilane, 3-glycidyloxypropyltriethoxysilane;
3-ethacryloxypropyltrialkoxysilane, 3-methacryloxypropyltriethoxysilane, 3-methacryloxypropyltrimethoxysilane; 3-aminopropyltrimethoxysilane, 3-aminopropyltriethoxysilane, 3-aminopropyl-dimethoxymethylsilane, 3-aAmino-2-methylpropyl-trimethoxysilane, N-(2-aminoethyl)-3-aminopropyltrimethoxysilane, N-(2-aminoethyl)-3-aminopropyl-triethoxysilane, N-(2-aminoethyl)-3-aminopropyl-dimethoxymethylsilane, 4-aminobutyl-trimethoxysilane, 4-aminobutyl-dimethoxymethylsilane, 4-amino-3-methylbutyl-trimethoxysilane, 4-amino-3,3-dimethylbutyl-trimethoxysilane, 4-amino-3,3-dimethylbutyl-dimethoxymethylsilane, 2-aminoethyl-trimethoxysilane, 2-aminoethyl-dimethoxymethylsilane, aminomethyl-trimethoxysilane, aminomethyl-dimethoxymethylsilane, aminomethylmethoxydimethylsilane, 7-amino-4-oxaheptyldimethoxymethylsilane, N-(methyl)-3-aminopropyltrimethoxysilane, N-(n-butyl)-3-aminopropyltrimethoxysilane, bis-[3-(trimethoxysilyl)-propyl]-amine, bis-[3-(triethoxysilyl)-propyl]-amine, 3-mercaptopropyltriethoxysilane, 3-mercaptopropyltrimethoxysilane, 3-mercaptopropyl-methyldimethoxysilane;
3-acylthiopropyltrimethoxysilane; vinyltrimethoxysilane and vinyltriethoxysilane.

In the case the adhesion promoter of the formula (III) is an isocyanate reactive silane (S) of the formula (I), the adhesion promoter can either be subsequently added to the hot melt adhesive composition, or it can already be added during the production of the reaction product (RP). If a stoichiometric surplus of the one isocyanate reactive silane (S) of the formula (I) is used during the production of the reaction product, the remaining isocyanate reactive silane (S) can remain in the reaction mixture of the reaction product (RP) and can be used without separation of the reaction product (RP) that is formed for the hot melt adhesive composition.

The total amount of all the adhesion promoters of the formula (III) is preferably less than 10 % by weight, more preferably 0.1 - 8.0 % by weight, most preferably 0.2 - 6 % by weight, based on the total weight of the hot melt adhesive composition.

The hot-melt adhesive composition can further comprise at least one filler. The filler is preferably inert mineral filler. The inert mineral filler is preferably selected from the group consisting of mica, talc, kaolin, wollastonite, feldspar, chlorite, bentonite, montmorillonite, calcium carbonate (precipitated or ground), dolomite, quartz, silicic acids (pyrogenic or precipitated), cristobalite, calcium oxide, aluminum hydroxide, magnesium oxide, hollow ceramic spheres, hollow glass spheres, hollow organic spheres, glass spheres, colored pigments, and mixtures thereof. According to one or more embodiments, the inert mineral filler is wollastonite.

Preferably, total amount of the fillers, if present in the hot-melt adhesive composition, is 1.0 - 40.0 % by weight, more preferably 5.0 - 35.0 % by weight, most preferably 5.0 - 20.0 % by weight, based on the total weight of the hot-melt-adhesive composition.

The hot-melt adhesive composition can further comprise, in addition to the at least one non-functionalized amorphous propylene-ethylene copolymer wax and the at least one polar-modified polyolefin wax, at least one silane functionalized polyolefin wax. The addition of silane functionalized polyolefin waxes to the hot-melt composition has been found increase the initial and final thermal resistance of the hot-melt adhesive.

Suitable silane functionalized polyolefin waxes are produced by grafting silanes to polyolefin waxes.

Preferably, the silane functionalized polyolefin wax is a wax of ethene and propene homo- and copolymers grafted with silane, in particular, a polypropylene or polyethylene wax grafted with silane.

Preferably, the silane functionalized polyolefin wax has a softening point of not more than 150 °C, more preferably not more than 120 °C, most preferably not more than 100 °C. For example, the softening point of the silane functionalized polyolefin wax can be in the range from 50 to 150 °C, preferably from 60 to 120 °C, most preferably from 60 to 100 °C.

The graft degree of the silane functionalized polyolefin wax can be at least 1 % by weight, for example, at least 3 % by weight, relative to the non-functionalized polyolefin wax. For example, the graft degree of the silane functionalized polyolefin wax can be in the range from 2.0 to 15.0 % by weight, preferably from 4.0 to 15.0 % by weight, most preferably from 8.0 to 12.0 % by weight.

The total amount of silane functionalized polyolefin waxes, if present in the hot-melt adhesive composition, is preferably not more than 20.0 % by weight, based on the total weight of the hot-melt-adhesive composition. Preferably, the amount of the silane functionalized polyolefin wax, if present in the hot-melt adhesive composition, is 1.0 - 20.0 % by weight, more preferably 1.0 - 15.0 % by weight, most preferably 5.0 - 15.0 % by weight, based on the total weight of the hot-melt adhesive composition.

The hot-melt adhesive composition can further contain, as additional component, at least one catalyst that accelerates the reaction of the silane groups. This catalyst can be, for example, an organic phosphorus or tin compound, for example, dibutyl tin laurate (DBTL). Suitable organic phosphorus compounds include, for example, phosphoric acid esters, which can be used as mixtures of mono-, di- and triesters of phosphoric acid that are esterified with alkanols, for example, those having a chain length in the range from 12 to 24 carbon atoms. The acid number of the phosphoric acid esters can be in the range from approximately 120 to 240 mg/KOH per gram.

The catalyst can be included in the hot-melt adhesive composition in a total amount of more than 0.05 % by weight but preferably not more than 5.0 % by weight. For example, the total amount of the catalysts, if present in the hot-melt adhesive composition, is preferably 0.1 - 3.0 % by weight, more preferably 0.1-2.0 % by weight, most preferably 0.1 - 1.0 % by weight, based on the total weight of the hot-melt adhesive composition.

In addition, the hot melt adhesive composition can contain additional auxiliary substances and additives, for example, those selected from the group consisting of plasticizers, adhesive promoters, UV absorption agents, UV and heat stabilizers, optical brighteners, pigments, dyes, and desiccants. Exemplary UV stabilizers that can be included in the hot melt adhesive composition include, for example, sterically hindered phenols. However, the total amount of such additional auxiliary substances and additives is, preferably, not more than 10.0 % by weight, more preferably not more than 5.0 % by weight, based on the total weight of the hot melt adhesive composition.

Preferably, the hot-melt adhesive composition has a softening point measured by Ring and Ball method according to DIN EN 1238 in the range from 50 to 140 °C, preferably from 60 to 130 °C, more preferably from 70 to 120 °C, most preferably from 80 to 110 °C. Hot melt adhesive compositions having a softening point in the above ranges have been found to be particularly suitable for use as adhesive in vacuum deep draw laminating and IMG-laminating processes.

According to one or more embodiments, the hot-melt adhesive composition comprises:
a) 30.0 - 90.0 % by weight, preferably 35.0 - 70.0 % by weight of the thermoplastic silane group containing poly-α-olefin that is solid at 25 °C,
b) 1.0 - 15.0 % by weight, preferably 5.0 - 15.0 % by weight of the non-functionalized amorphous propylene-ethylene copolymer wax obtained by metallocene-catalyzed polymerization and having a softening point of not more than 120 °C, preferably not more than 100 °C,
c) 1.0 - 5.0 % by weight, preferably 1.0 - 3.0 % by weight of the paraffin wax having a softening point in the range from 80 to 130 °C,
d) 0 - 10.0 % by weigh of at least one maleic anhydride functionalized polyolefin wax having a softening point of not more than 120 °C, preferably not more than 100 °C,
e) 0 - 20.0 % by weight of at least one tackifying hydrocarbon resin having a softening point in the range from 60 to 150 °C, preferably from 70 to 130 °C,
f) 0 - 5.0 % by weight of at least one reaction product (RP) of a polyisocyanate with an isocyanate reactive silane (S),
g) 0 - 40.0 % by weight of at least one inert mineral filler, and
h) 0 - 3.0 % by weight of at least one catalyst, which accelerates the reaction of silane groups, all the proportions being based on the total weight of the hot-melt adhesive composition.

According to one or more embodiments, the hot-melt adhesive composition comprises:
a) 35.0 - 70.0 % by weight of the thermoplastic silane group containing poly-α-olefin that is solid at 25 °C,
b) 5.0 - 15.0 % by weight of the non-functionalized amorphous propylene-ethylene copolymer wax obtained by metallocene-catalyzed polymerization and having a softening point of not more than 120 °C, preferably not more than 100 °C,
c) 1.0 - 3.0 % by weight of the paraffin wax having a softening point in the range from 80 to 130 °C,
d) 1.0 - 7.5 % by weigh of at least one maleic anhydride functionalized polyolefin wax having a softening point of not more than 120 °C, preferably not more than 100 °C,
e) 5.0 - 15.0 % by weight of at least one tackifying hydrocarbon resin having a softening point in the range from 70 to 130 °C,
f) 0.1 - 2.5 % by weight of at least one reaction product (RP) of a polyisocyanate with an isocyanate reactive silane (S),
g) 5.0 - 35.0 % by weight of at least one filler and
h) 0.1 - 2.0 % by weight of at least one catalyst, which accelerates the reaction of silane groups, all the proportions being based on the total weight of the hot-melt adhesive composition.

The production of the hot-melt adhesive compositions according to the present invention can be conducted by mixing the constituents in the usual manner for hot-melt adhesives, known to the person skilled in the art.

The hot-melt composition of the present invention is especially suitable for use as adhesive in vacuum deep draw laminating, in particular, in IMG-laminating processes.

In vacuum deep draw laminating process, the adhesive is first applied on the surface of a film-type substrate, typically a polymeric film made of thermoplastic polyolefin (TPO, TPE-O) material. In the next step, the polymeric film with the coated layer of adhesive is heated to a reactivation temperature and drawn with a vacuum against surface of another substrate (carrier) which is typically composed of polypropylene, natural fiber support material or ABS. The vacuum is created by removing air from the space between the polymeric film and the carrier through holes passing through the carrier.

In IMG-laminating process (in-mold grain laminating), a plain polymeric film having a layer of adhesive coated on its first surface is heated and subjected to surface treatment, which creates a desirable grain or texture on the second surface of the polymeric film. After the surface treatment, the heated and textured polymeric film is drawn with a vacuum against surface of another substrate (carrier) to create an adhesive bond between the polymeric film and the carrier. The advantage of the IMG-laminating process is that the number of processing steps and assembly stations can be decreased compared to conventional lamination processes since the formation of the surface texture can be conducted during the laminating step.

The hot-melt adhesive of the present invention has some characteristics, which make it especially suitable for use as adhesive in IMG-laminating process.

In particular, the hot-melt adhesive composition retains its tackiness at low temperatures, i.e. the adhesive is able to wet the surface of a substrate at relatively low temperatures of 50 - 70 °C. The ability to wet the surface of a substrate at low temperatures is essential in IMG-laminating processes, in which the reactivated adhesive is contacted with the second substrate after relatively long waiting time, typically in the range of 10 - 15 s. The hot-melt adhesive also exhibits a relatively long open time, high initial thermal strength and high initial bonding strength.

Furthermore, the adhesive has a low softening point of less than 130 °C. The low softening point of the adhesive enables the use of low reactivation temperature, which is required if carriers are laminated with polymeric films having low thermal stability. The low reactivation temperature also means that the amount of energy used in the laminating process is decreased, which translates into improved process economy.

Finally, the hot-melt adhesive of the present invention has also sufficient storage stability and good workability under usual application conditions, especially at temperatures in the range from 100 to 200 °C. It is also viscosity stable for a sufficiently long time, which allows application of the hot-melt adhesive with open rollers. In addition, the hot-melt adhesive composition hardens quickly and completely in the presence of moisture without producing an odor and without forming any bubbles during the process, even when applied in a thick layer. The cured hot-melt adhesive has a high final strength and good heat stability as well as good resistance to environmental influences.

According to another aspect of the present invention, a method for producing a composite element comprising a polymeric film and a carrier is provided, the method comprising steps of:
i) Applying a hot-melt composition according to the present invention to one of the planar surfaces of the polymeric film to form a layer of adhesive,
ii) Heating the layer of adhesive to a reactivation temperature,
iii) Mating the polymeric film with the carrier such that one of the planar surfaces of the carrier is contacted with the layer of adhesive, which forms, after cooling and curing in the presence of moisture, an adhesive bond between the film and the carrier.

In the method for producing a composite element, the hot-melt adhesive composition can be applied on the surface of the polymeric film by melting the hot-melt adhesive composition and by applying molten adhesive composition to the planar surface of the polymeric film followed by subsequent cooling the adhesive. The molten adhesive can be applied on the surface of the polymeric film using any conventional technique, for example, by slot die coating, roller coating, extrusion coating, calender coating, or spray coating. Typical application temperatures for the hot-melt adhesive composition are in the range from 100 to 200 °C, preferably form 100 to 180 °C, in particular 120 to 160 °C. The adhesive composition can be applied to the polymeric film to have a layer thickness of 50 - 150 g/m².

The temperature into which the layer of adhesive is heated in step ii), i.e. the reactivation temperature, is preferably in the range from 100 to 200 °C, more preferably from 120 to 160 °C. The heating of the layer of adhesive can be conducted using any conventional technique, such as heating in an oven, heating by air stream, or heating with infrared (IR)-radiation.

The layer of adhesive is preferably contacted with the surface of the carrier shortly after the layer of adhesive reaches the reactivation temperature, in any case within the open time of the adhesive composition. Preferably, the waiting time, i.e. the time period after the adhesive has been heated to the reactivation temperature and before it is being contacted with the upper surface of the carrier, is not more than 30 s, more preferably not more than 20 s. The waiting time can be, for example, in the range from 5 to 20 s, in particular from 10 to 15 s.

After the polymeric film and the carrier have been mated together, the layer of adhesive forms upon cooling and curing by moisture an adhesive bond between the film and the carrier.

The method for producing a composite element can comprise a further step ii'), in which the carrier is heated before it is mated with the polymeric film in step iii). The temperature to which the carrier is heated depends on the material of the carrier. In case the carrier is composed of ABS material, the carrier is preferably heated to a temperature of not more than 100 °C. Preferably, the carrier is heated to a temperature in the range from 50 to 100 °C, more preferably from 50 to 80 °C.

The polymeric film can be pressed together with the carrier or drawn with vacuum against the upper surface of the carrier. Preferably, the polymeric film is drawn with vacuum against the upper surface of the carrier in a vacuum deep draw laminating or IMG-laminating process.

The polymeric film can be a flexible flat film composed of polyolefin material, in particular thermoplastic polyolefin (TPO, TPE-O) material. The thickness of the polymeric film can be 0.05 - 5.0 mm, preferably 0.05 - 1.0 mm. The polymeric film can be composed of one single layer or of several layers of different materials. The layer(s) can contain, in addition to TPO material, other polymers and/or additives such as fillers, plasticizers, flame retardants, thermal stabilizers, antioxidants, pigments, dyes, and biocides.

The carrier can be a three-dimensional shaped article. The carrier or the upper surface of the carrier can be composed of any conventional material including polymeric material, in particular polyolefin material, metal, painted metal, wood, wood derived materials such as natural fiber polypropylene (NFPP), and fiber materials.

Suitable polymeric materials for the carrier include polyethylene (PE), in particular high density polyethylene (HDPE), polypropylene (PP), glass-fiber reinforced polypropylene, polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof.

The term "fiber material" refers to a material composed of fibers. The fibers comprise or consist of organic, inorganic or synthetic material. Examples of suitable fibers include cellulose fibers, cotton fibers, protein fibers, glass fibers, and synthetic fibers made of polyester, or homopolymer or copolymer of ethylene and/or propylene, viscose, or mixtures thereof. The fibers can be short fibers or long fibers, spun, woven or unwoven fibers or filaments. The fibers can moreover be aligned or drawn fibers. Moreover, it can be advantageous to use different fibers, both in terms of geometry and composition, together. Felt and fleece can be mentioned as particularly preferable fiber materials.

The carrier or the upper surface of the carrier preferably comprises or consists of materials selected from the group consisting of polypropylene, in particular glass-fiber reinforced polypropylene, natural fibers, in particular resin bonded natural fibers, and ABS.

The upper surface of the carrier can be subjected to a pre-treatment step, such as cleaning or pre-treatment with a primer, before being contacted with the adhesive layer applied on the polymeric film. Preferably, the upper surface of the carrier is not treated with a primer.

According to another aspect of the present invention, a composite element obtainable by the use of the method present invention is provided. The composite element can be, for example, a part of a vehicle, such as an automotive vehicle.

According to still another aspect of the present invention, use the hot-melt adhesive composition of the present invention as adhesive in vacuum deep draw laminating process or in IMG-laminating process is provided.

### Examples

The followings compounds and products shown in Table 1 were used in the examples. The softening points have been measured according to DIN EN 1238.

**Table 1**

| | | |
|---|---|---|
| WingTack® 86 | Hydrocarbon resin, softening point 86 °C | Cray Valley |
| Hikorez® A-2115 | Hydrocarbon resin, softening point 112 °C | Kolon Industries Inc., Korea |
| Vestoplast® 703 | Amorphous poly-α-olefin, softening point 124 °C | Evonik Industries |
| Vestoplast® 408 | Amorphous poly-α-olefin, softening point 118 °C | Evonik Industries |
| Licocene® PP 1302 | Propylene-ethylene-copolymer wax, softening point 90 °C | Clariant |
| Licocene® PP 2602 | Propylene-ethylene-copolymer wax, softening point 98 °C | Clariant |
| Vestowax® SH 105 | Synthetic hard wax, softening point 111 °C | Evonik Industries |
| Tremin® 939-300 HST | Wollastonite filler | Quarzwerke Group |
| Microdol® 5 KN | Dolomite filler | Omya International AG |
| Licocene® PP MA 1332 | Maleic anhydride grafted polypropylene wax, softening point 80 °C | Clariant |
| Licocene® PP MA 6452 | Maleic anhydride grafted polypropylene wax, softening point 143 °C | Clariant |
| Reaction product (RP) | Mercaptosilan+ Methyl diphenyl diisocyanate (MDI) | Sika AG |
| Vestoplast® 206 | Silane grafted amorphous poly-α-olefin, softening point 98 °C | Evonik Industries |
| Licocene® PP SI | Silane grafted polypropylene wax (10 %), softening point 80 °C | Clariant |
| Hordaphos® MDST | Phosphoric acid ester | Clariant |
| Tinopal® | Optical brightener | BASF |
| Irganox® 1010 | Antioxidant | BASF |

The hot-melt adhesives compositions of the present invention and comparative hot-melt adhesive compositions were examined for their adhesive properties using the methods as described below.

The ability of an adhesive composition to form an adhesive bond between polar- and non-polar substrates was examined by dynamic and static peel strength measurements.

The initial (green) bonding strength of the adhesive compositions was examined by measuring the tensile shear strength obtained with adhesive compositions when used for bonding rigid plastic substrates.

The tendency of the adhesive compositions to form an adhesive bond with aluminum surfaces was examined by dynamic peel strength measurements.

Finally, the suitability of the adhesive compositions for IMG-laminating process was examined by measuring peel strengths of composite test specimen produced by a simulated IMG-laminating process with various waiting times.

The exemplary adhesive compositions of Ex1-Ex3 and comparative adhesive composition Comp Ex1-Ex6 are presented in Table 2 and results of the dynamic peel strength, static peel strength at 90 °C, viscosity at 140 °C, open time, initial bonding strength, Shore A, softening point, and bonding strength to aluminum surface, are presented in Table 3. The results of the simulated IMG-laminating process are presented in Table 4.

### Production of test composite elements for dynamic and static peel strength measurements

Test composite elements comprising a multilayer textile sheet laminated to an ABS film using the adhesive compositions were produced as follows.

A multilayer textile sheet comprising a layer of fleece and a layer of textile and having dimensions of 20 cm x 10 cm x 0.6 mm was first coated with a sample of the molten adhesive composition. The adhesive composition was applied on the fleece side of the textile sheet with a thickness of the adhesive layer of 0.1 mm. Subsequently after the coating step, the textile sheet was placed in an oven to heat the adhesive to a reactivation temperature of 135 °C. The textile sheet was then pressed together with the ABS-film, which had been heated to a temperature of 70 °C. The ABS film had dimensions of 15 cm x 5 cm x 3 mm and it was laminated with the textile sheet in such way that the bonded area between the ABS-film and the textile sheet was 10 cm x 5 cm.

The test composite elements were stored for one week at room temperature to ensure the complete curing of the adhesive layers before measuring the dynamic and static peel strengths.

### Dynamic peel strength

Dynamic peel strengths were determined by measuring the average peel force (peel resistance) required to delaminate the textile sheet from the test composite elements.

In the dynamic peel strength measurement, the textile sheet was peeled off from the surface of the ABS substrate at a peeling angle of 90 ° and at a constant cross beam speed of 100 ± 0.1 mm/min. A Zwick /Roell Z010 material testing apparatus equipped with a roll-peeling device was used in the measurements.

The peeling of the textile sheet was continued until a length of approximately 100 mm of the textile sheet was peeled off from the surface of the ABS-substrate. The peel resistance is calculated as average peel force per unit width of the textile sheet [N/ 50 mm] during peeling over a length of approximately 80 mm. The values for dynamic peel strength presented in Table 3 have been obtained as average of two measurements conducted with composite elements produced with the same adhesive composition.

### Static peel strength 45° at elevated temperature

Static peel strength was examined by measuring the amount of delamination caused by a static peeling force directed to the textile sheet at an angle of 45 °.

For the static peel measurement, each test composite element was fixed at one of its ends to a metallic stand such that the longitudinal axis of the test composite element formed an angle of 45 ° in relation to the horizontal plane. A clamp having a weight attached to its lower end was fixed to the non-bonded strip of the textile sheet at the other end of the test specimen. Due to the weight attached to the clamp, a static peel force was directed to the textile sheet at an angle of 45 ° in relation to the vertical axis. The metallic stand with the test specimen attached to it was placed in an oven, which had a controlled and constant temperature of 90 °C.

The peeled length of the textile sheet after a time period of one hour was recorded taking into account the peeled length due to the initial delamination of the textile sheet. After recording the value, the mass of the weight attached to the clamp was increased and the measurement was continued for one more hour. The measurement was started with a weight of 50 g and the measurement was continued until peeled length reached a value of 80 mm or until the textile sheet was completely delaminated from the ABS-film. The values of peeled lengths presented in Table 3 have been obtained as an average of two measurements conducted with composite elements produced with the same adhesive composition.

### Viscosity at 140 °C

The adhesive composition was placed in a sealed tube and heated in an oven to a temperature of 140 °C. After a time period of 20 minutes, a sample of 9.7 g of the adhesive composition was weighted and placed in a disposable sleeve to a viscometer. The viscosity was measured at temperature of 140 °C at 10 revolutions per minute using a Brookfield DV-2 Thermosel viscometer with a spindle No. 27. The value of viscosity resulting after five minutes of measurements was chosen as the representative measured value.

### Open time

The adhesive composition was placed in a sealed tube and heated to a temperature of 150 °C in an oven. After a time period of 20 minutes, a sample of 20 g of the molten adhesive was applied on the surface of a silicone coated paper, which was placed on a heating plate having a temperature of 150 °C. The application of the adhesive composition to the paper was conducted using a doctor blade, which had also been heated to the temperature of 150 °C. The silicone coated paper had dimensions of 50 cm x 10 cm and the adhesive was applied on the paper with a thickness of 500 µm.

The silicone coated paper having the adhesive layer applied on its surface was then placed on a table at room temperature. Every 10 seconds a short strip of paper was pressed lightly with a finger on the adhesive layer and slowly removed. The procedure was continued until the paper strip could not be any more removed from the adhesive layer without damaging the paper strip. The corresponding time was recorded as the open time of the adhesive composition. The values of open time presented in Table 3 have been obtained as an average of three measurements conducted with the same adhesive composition.

### Initial (green) bonding strength

The initial bonding strength was tested by measuring tensile shear strengths of example adhesive compositions when they were used for bonding rigid plastic substrates.

The adhesive composition was placed in a sealed tube and heated to a temperature of 140 °C in an oven. After a time period of 20 minutes, test specimens for tensile shear strength measurements were produced as follows.

A sample of molten adhesive was applied on the surface of a polypropylene (PP) sheet having dimensions of 10 cm x 2.5 cm x 4 mm. The thickness of the adhesive layer was 1 mm and the bond area was 2.5 cm x 2.5cm. The layer of adhesive was then contacted with the surface of another similar PP-sheet having same dimensions as the first PP-sheet and the sheets were pressed together using a weight of 50 g. The tensile shear strength (N/mm²) was measured after storing the test specimens for 30 minutes at room temperature. A Zwick /Roell material testing apparatus was used in the tensile strength measurements.

### Shore A

The Shore A was measured according to DIN EN ISO 868.

### Softening point of adhesive

The softening point was measured by to Ring-And-Ball method according to EN DIN 1238.

### Bonding to aluminum surface

The bonding strength to aluminum surfaces was determined by measuring the average peel force (peel resistance) required to delaminate a TPO-film bonded with the tested adhesive composition to an aluminum plate.

The adhesive composition was placed in a sealed tube and heated to a temperature of 140 °C in an oven. After a time period of 20 minutes, test specimens for peel resistance measurements were produced as follows.

A sample of molten adhesive was applied on the surface of a strip of silicone paper. The paper strip had dimensions of 10 cm x 5 cm x 0.2 mm and the adhesive was applied to the surface of the paper strip with a thickness of 0.1 mm. The paper strip having the adhesive layer coated on its surface was pressed together with a TPO-film having dimensions of 20 cm x 5 cm x 1 mm and the paper strip was subsequently removed leaving the layer of adhesive on the surface of the TPO-film. The TPO-film was then placed under IR-radiator and the layer of adhesive was heated to a temperature of 160 °C to reactivate the adhesive. The layer of adhesive was then contacted with a surface of an aluminum plate and the TPO-film was pressed against the aluminum plate for a time period of 30 s before conducting the peel resistance measurements.

In the peel resistance measurement, the TPO-film was peeled off from the surface of the aluminum plate at an angle of 90 ° and at a constant cross beam speed of 100 ± 0.1 mm/min. A Zwick/Roell Z010 material testing apparatus equipped with a roll-peeling device was used in the peel resistance measurements.

The peeling of the TPO-film was continued until the TPO-film was completely delaminated from the surface of the aluminum plate. The peel resistance was calculated as average peel force per unit width of the TPO-film [N/50 mm] during peeling over a length of approximately 80 mm. In case the measured peel resistance was lower than 0.2 N/50 mm, the adhesive composition was considered not to bond to aluminum surfaces and the result was "negative". In the opposite case, the result of the test was "positive".

### Suitability of the adhesive compositions for use in IMG-laminating process

The suitability of the adhesive compositions of Example 1 and of comparative Example 6 were studied by measuring peel strengths of test composite elements produced by a simulated IMG-laminating process. In the simulated IMG-lamination process, the waiting time was varied between 6 and 20 seconds. The peel strengths were determined as average peel force according to the procedure described above for the measurement of dynamic peel strength. The type of adhesive failure was determined by visual inspection.

The test composite elements comprising a textile sheet with polyurethane backing and an ABS film were produced by a simulated IMG-laminating process as follows.

The tested adhesive composition was first applied on the surface of the polyurethane backing of the textile sheet having dimensions of 15 cm x 5 cm x 1 mm. The adhesive composition was applied on the polyurethane backing with a thickness of the adhesive layer of 80 g/m². The adhesive composition of Example 1 was heated to a temperature of 150 °C before being applied on the polyurethane backing. Due to the higher softening point, the adhesive composition of the comparative Example 6 was heated to a higher temperature of 180 °C before being applied on the polyurethane backing.

The adhesive layers were allowed to cool to room temperature and subsequently reactivated by heating using an IR-heating device. After waiting time of X seconds, the ABS film having dimensions of 15 cm x 5 cm x 3 mm was contacted with the reactivated layer of adhesive and pressed with a roll against the textile sheet using a roller weight of 5 kg. The test composite elements were allowed to cool for 5-10 minutes before conducting the peel strength measurement.

The results of the peel strength measurements are presented in Table 4 for the adhesive composition of Example 1 and in Table 5 for the adhesive composition of the comparative Example 6.

**Table 2: Hot-melt adhesive compositions**

| **Ingredients (wt.-%)** | **EX 1** | **Comp EX 1** | **Comp EX 2** | **Comp EX 3** | **EX 2** | **Comp EX 4** | **Comp EX 5** | **EX 3** | **Comp EX 6** |
|---|---|---|---|---|---|---|---|---|---|
| WingTack 86 | | | | | | | | | |
| Hikorez A-2115 | 7.13 | 7.59 | 7.78 | 6.50 | | 14.30 | 7.13 | 7.78 | |
| Vestoplast 703 | 9.98 | 10.62 | 10.89 | 9.10 | 10.76 | 9.22 | 9.98 | 10.89 | 23.71 |
| Vestoplast 408 | | | | | | | | | |
| Vestoplast 792 | | | | | | | | | |
| Licocene PP 1302 | 8.20 | 8.35 | | 16.40 | 8.84 | 7.58 | 8.20 | 8.35 | |
| Vestowax SH 105 | 2.71 | | 2.95 | 2.47 | 2.92 | 2.50 | 2.71 | 2.95 | 4.74 |
| Tremin 939-300 HST | 9.27 | 9.86 | 10.10 | 8.45 | 9.99 | 8.56 | 9.27 | 10.10 | |
| Licocene PP MA 1332 | 3.57 | 3.79 | 3.89 | 3.25 | 3.84 | 3.29 | | | |
| Licocene PP MA 6452 | | | | | | | 3.57 | | 9.49 |
| Reaction product (RP)^{*} | 0.71 | 0.76 | 0.78 | 0.65 | 0.77 | 0.66 | 0.71 | 0.78 | |
| Vestoplast 206 | 48.50 | 49.32 | 52.88 | 44.21 | 52.27 | 44.80 | 48.50 | 48.42 | 52.17 |
| Licocene PP SI | 9.27 | 9.10 | 10.10 | 8.45 | 9.99 | 8.56 | 9.27 | 10.10 | 9.5 |
| Hordaphos MDST | 0.50 | 0.46 | 0.47 | 0.39 | 0.46 | 0.40 | 0.50 | 0.47 | 0.14 |
| Tinopal | 0.02 | | | | | | 0.02 | | 0.02 |
| Irganox 1010 | 0.14 | 0.15 | 0.16 | 0.13 | 0.16 | 0.13 | 0.14 | 0.16 | 0.24 |
| Sum | 100.00 | 100.00 | 100.0 | 100.00 | 100.00 | 100.00 | 100.00 | 100.00 | 100.0 |

| | | | | | | | | | |
|---|---|---|---|---|---|---|---|---|---|
| ^{*}Reaction product of mercaptosilan and methyl diphenyl diisocyanate (MDI) | | | | | | | | | |

**Table 3: Adhesive properties**

| **Results** | | **EX 1** | **Comp EX 1** | **Comp EX 2** | **Comp EX 3** | **EX 2** | **Comp EX 4** | **Comp EX 5** | **EX 3** |
|---|---|---|---|---|---|---|---|---|---|
| Dynamic peel strength [N/50 mm], textile fleece-ABS laminate, reactivation of adhesive at 135 °C, measured at room temperature | | 21.8 | 20.5 | 8.1 | 19.8 | 7.5 | 20.5 | 3.5 | 10,5 |
| Static peel strength 45 °, textile fleece-ABS laminate, reactivation of adhesive at 135 °C, measured at 90 °C | 50 g | 0 mm | 0 mm | 0 mm | 0 mm | 0 mm | 0 mm | 0 mm | 0 mm |
| | 100 g | 0 mm | 0 mm | 0 mm | 4 mm | 0 mm | 8 mm | 0 mm | 0 mm |
| | 200 g | 6 mm | 5 mm | completely | 21 mm | completely | 31 mm | completely | 26 mm |
| | 300 g | 25 mm | 23 mm | - | 43 mm | - | 44 mm | - | completely |
| | 400 g | completely | completely | - | completely | - | completely | - | - |
| | 500 g | - | - | - | - | - | - | - | - |
| Viscosity, measured at 140 °C [mPa·s] | | 15000 | 20000 | 17100 | 12700 | 14000 | 14000 | 17800 | 18000 |
| Open time [seconds] | | 40 | 40 | 40 | 30 | 30 | 45 | 30 | 40 |
| Initial bonding strength [N/mm²] | | 0.6 | 0.8 | 0.4 | 0.4 | 0.5 | 0.4 | 0.9 | 0.5 |
| Shore A | | 75 | 75 | 70 | 70 | 71 | 70 | 75 | 74 |
| Softening point [°C] | | 99 | 99 | 98 | 98 | 100 | 99 | 128 | 101 |
| Peel strength [N/50 mm], TPO-film bonded to aluminum plate | | 0,17 | 0,52 | 0,15 | 0,26 | 0,12 | 0,35 | 0,10 | 0,16 |
| Bonding to aluminum surface | | negative | positive | negative | positive | negative | positive | negativ | negative |

**Table 4: IMG-laminating with adhesive composition of Ex 1**

| | Waiting time after reactivation [s] | | | | | |
|---|---|---|---|---|---|---|
| Reactivation temperature [°C] | 0 | 6 | 10 | 12 | 15 | 20 |
| 180 | Ok | Ok | Ok | Ok | Ok | Ok |
| 170 | Ok | Ok | Ok | Ok | Ok | Not ok |
| 160 | Ok | Ok | Ok | Ok | Ok | Not ok |
| 150 | Ok | Ok | Ok | Ok | Not ok | Not ok |
| 140 | Ok | Ok | Ok | Ok | Not ok | Not ok |
| 130 | Ok | Ok | Ok | Ok | No bonding | No bonding |

| | | | | | | |
|---|---|---|---|---|---|---|
| Ok = cohesive failure of the polyurethane backing Not ok = adhesive failure of the polyurethane foam backing from the ABS film | | | | | | |

**Table 5: IMG-laminating with adhesive composition of Comp Ex 6**

| | Waiting time after reactivation [s] | | | |
|---|---|---|---|---|
| Reactivation temperature [°C] | 0 | 6 | 10 | 12 |
| 200 | Ok | Ok | Ok | Not ok |
| 190 | Ok | Ok | Not ok | Not ok |
| 180 | Ok | Ok | Not ok | No bonding |
| 170 | Ok | Not ok | No bonding | No bonding |
| 160 | Ok | Not ok | No bonding | No bonding |

## Claims

1. A hot-melt adhesive composition comprising:
a) at least one thermoplastic silane group containing poly-α-olefin that is solid at 25 °C,
b) at least one non-functionalized amorphous propylene-ethylene copolymer wax having a softening point measured by Ring and Ball method according to DIN EN 1238 of not more than 120 °C, and
c) at least one paraffin wax having a softening point measured by Ring and Ball method according to DIN EN 1238 in the range from 80 to 130 °C.

2. A hot-melt adhesive composition according to claim 1, wherein
a) The total amount of the silane group containing poly-α-olefins is at least 30.0 % by weight, preferably 35.0 - 70.0 % by weight; and/or
b) The total amount of non-functionalized amorphous propylene-ethylene copolymer waxes is 1.0 - 15.0 % by weight, preferably 5.0 - 15.0 % by weight of; and/or
c) Total amount of the paraffin waxes is 1.0 to 5.0 % by weight, preferably from 1.0 to 3.0 % by weight of, all the proportions being based on the total weight of the hot-melt adhesive composition.

3. The hot-melt adhesive composition according to claim 1 or 2, wherein the silane group containing poly-α-olefin has a softening point measured by Ring and Ball method according to DIN EN 1238 in the range from 60 to 150 °C, preferably in the range from 80 to 140 °C.

4. The hot-melt adhesive composition according to any of previous claims, wherein the silane group containing poly-α-olefin is a silane grafted atactic poly-α-olefin (APAO).

5. The hot-melt adhesive composition according to any of previous claims further comprising at least one maleic anhydride functionalized polyolefin wax having a softening point measured by Ring and Ball method according to DIN EN 1238 of not more than 120 °C, preferably not more than 100 °C, wherein said maleic anhydride functionalized polyolefin wax is a maleic anhydride grafted polypropylene wax or maleic anhydride grafted polyethylene wax.

6. The hot melt adhesive composition according to claim 5, wherein the total amount of the maleic anhydride functionalized polyolefin waxes is 0.5 - 10.0 % by weight, preferably from 1.0 - 7.5 % by weight, based on the total weight of the hot-melt adhesive composition.

7. The hot-melt adhesive composition according to any of previous claims further comprising at least one hydrocarbon resin having a softening point measured by Ring and Ball method according to DIN EN 1238 in the range from 70 to 130 °C, preferably from 80 to 120 °C.

8. The hot-melt adhesive composition according to any of previous claims further comprising at least one reaction product (RP) of a polyisocyanate with an isocyanate reactive silane (S).

9. The hot-melt adhesive composition according to any of previous claims further comprising at least one inert mineral filler, wherein the total amount of the inert mineral fillers is 1.0 - 40.0 % by weight, preferably 5.0 - 35.0 % by weight, based on the total weight of the hot-melt-adhesive composition.

10. The hot-melt adhesive composition according to any of previous claims having a softening point measured by Ring and Ball method according to DIN EN 1238 in the range from 60 to 130 °C, preferably from 70 to 120 °C.

11. A method for producing a composite element comprising a polymeric film and a carrier, the method comprising steps of:
i) Applying a hot-melt composition according to any of claims 1-10 to one of the planar surfaces of the polymeric film to form a layer of adhesive,
ii) Heating the layer of adhesive to a reactivation temperature,
iii) Mating the film with the carrier such that one of the planar surfaces of the carrier is contacted with the layer of adhesive, which layer of adhesive forms after cooling an adhesive bond between the film and the carrier.

12. The method according to claim 11, wherein the film is composed thermoplastic olefin material and/or the carrier or at least the upper surface of the carrier is composed of polyolefin, natural fibers or ABS-material.

13. The method according to claim 11 or 12, wherein in step iii) the film is drawn to the carrier using vacuum deep draw laminating technique or IMG-laminating technique.

14. A composite element obtainable by use of the method according to any of claims 11-13.

15. Use of the hot-melt adhesive composition according to any of claims 1-10 as adhesive in vacuum deep draw laminating or in IMG-laminating process.
